# EUROPEAN PATENT APPLICATION

(11) **EP 1 981 245 A1**
(43) Date of publication of application: **15.10.2008**
(21) Application number: 07405120.2
(22) Date of filing: 13.04.2007
(51) Int. Cl.: H04L 29/08

(54) **Method and product for controlling laboratory equipment**

(71) Applicant: LICONIC AG, 9493 Mauren (LI)
(72) Inventor: MALIN Cosmas, C., FL-9493 Mauren (LI)
(74) Representative: Sutter, Kurt

(57) **Abstract**

A software service (6) listening to incoming messages on a TCP/IP port (2) is provided on a host computer (1). The incoming messages are processed by the software service (6) and are used to control laboratory equipment (4) through a hardware interface (5) of the host computer (1). One advantage of this scheme is that the software service (6) can be controlled through an extremely well defined interface, namely the TCP/IP port (2), thereby providing a high degree of modularity and portability. Also, the system is inherently network-enabled.

## Description

The invention relates to a method and product for controlling laboratory equipment, in particular for controlling an automated storage system for laboratory objects, such as microwell plates. The invention also relates to a computer comprising means for carrying out the steps of the method described here.

Laboratory equipment is typically comprised of specialized hardware for controlling, handling, storing or analyzing laboratory objects, such as chemical or biological samples in suitable containers. Other laboratory equipment is used for controlling, measuring or analyzing processes or samples in a laboratory.

Various solutions for controlling such laboratory equipment are known. Typically, the equipment is connected to a host computer, and software running on the host computer is used to control the equipment. The equipment is connected to the computer by means of a hardware interface, such as a serial port. For improving the modularity of the software, the manufacturer of the equipment can provide a library of code that provides a well-defined API for controlling the equipment, thereby shielding the higher level components of the software from the intricacies of the equipment interface. This scheme is particularly useful if the higher level components of the software are written by an entity other than the equipment's manufacturer.

The problem to be solved by the present invention is to provide a system of this type with even better modularity.

This problem is solved by the independent claims. Accordingly, a software service listening to incoming messages on a TCP/IP port is provided on the host computer. The incoming messages are processed by the software service and are used to control the laboratory equipment through the hardware interface.

The advantage of this scheme is that the software service can be controlled through an extremely well defined interface, namely a TCP/IP port. All presently used major operating systems and most programming environments have standardized APIs for accessing a TCP/IP port, which makes it possible to control the laboratory equipment from any programming language and computer.

It must be noted that this is a highly unconventional application of a TCP/IP port. Typically, TCP/IP ports are used for providing remote computers with a means to control a given computer. In the present application, the TCP/IP port is used for providing remote computers as well as processes running on the host computer with a means to control equipment that is not part of the host computer. A more straightforward approach would be to install a TCP/IP interface on the laboratory equipment and then talk to a TCP/IP port of the equipment directly. This, however, would require complex hard- and software on the laboratory equipment.

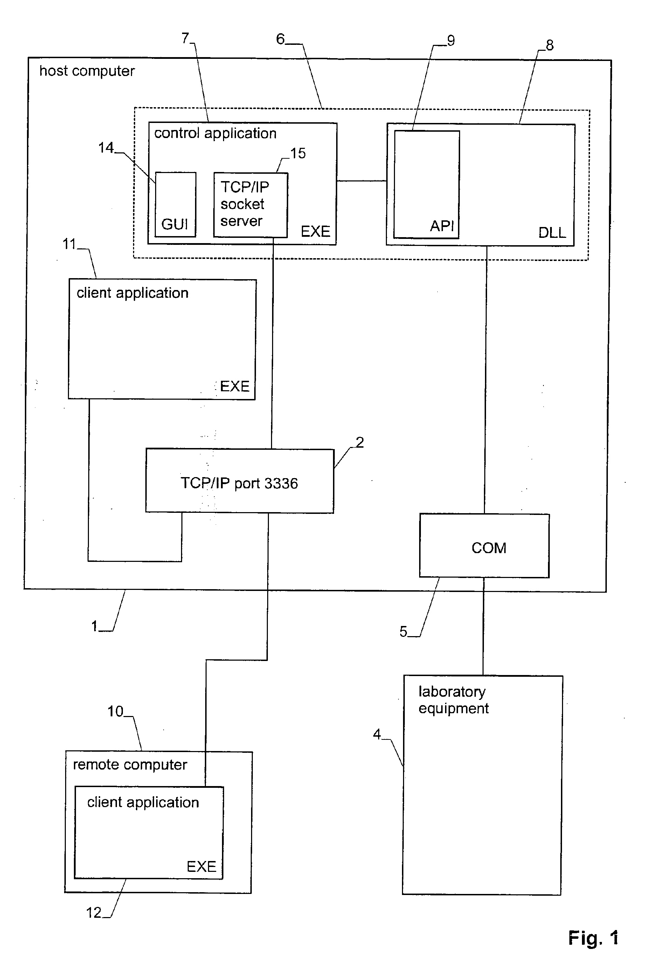

Advantageous embodiments of the present application are described in the dependent claims as well as in the following description. The description makes reference to the annexed Figure 1, which shows a block diagram of the most important components of the system.

Before describing the system in detail, the following definitions are given:
- The term "dynamically linkable library" (or "dynamically linked library") or DLL is used herein to designate a library comprising code and a description for calling said code, and it is in a format that allows the code to be read into executable memory by the operating system and to be called by a thread running on the host computer. Typical examples of dynamically linkable libraries are the so-called DLL files under the Windows operating system, but other file formats can be used as well.
- A TCP/IP port is a specific port or socket under the TCP/IP protocol. Such a port is fully identified on a local network by its IP-address and port number.
- Encoding data (such as commands or answers) "as a string of characters" is to be understood as encoding the data as a series of characters, e.g. using ACSII or UTF8 coding. Typically, each character has 8 or 16 bits, albeit 8 bit encoding is preferred because it does not suffer from endian-related problems in cross-platform communication. For example, numbers are encoded as a series of numeric characters, e.g. '3', '2', for the number 32, and not in binary format (such as hex 0x20 for the number 32).

The system shown in Fig. 1 comprises a host computer 1, which is typically a fully equipped computer with a conventional operating system and hardware, including keyboard and display.

In particular, host computer 1 is equipped with a TCP/IP interface having a plurality of ports. As mentioned, at least one port is used by the system of the present invention. In Fig. 1, this port is designated by reference number 2 and, by way of example, carries port number 3336, although any other unused and non-reserved port number can be used as well.

Furthermore, host computer 1 has an interface for communicating with the external laboratory equipment 4. In the example of Fig. 1, a serial port 5 is used for that purpose. Port 5 can e.g. be an RS-232, USB or Ethernet port. It must be noted, however, that any other type of interface can be used for connecting host computer 1 to laboratory equipment 4, such as an Ethernet connection (using a port other than the one indicated by reference number 2), a wireless connection, a Firewire connection, a parallel printer port, etc.

Typically, laboratory equipment 4 will be remote to host computer 1, e.g. it will be located outside the housing of host computer 1 and be connected thereto by means of cabling or a wireless connection.

Laboratory equipment 4 is advantageously an automated storage system for laboratory objects in a climate controlled chamber, such as e.g. described in WO 02/059251. It comprises a plurality of storage locations for microwell plates (microtiter plates) and an automated transport device for accessing the plates in the storage locations, e.g. for moving the plates between storage locations, or for transferring the plates between the storage locations and an external system. The equipment can further be provided with a control system and sensors for controlling the climate (temperature and atmospheric com-postion) in the cabinet as well as with a bar code reader for reading bar codes attached to the plates. The equipment can be controlled through interface 5 by means of a set of low level instructions.

The purpose of the present invention is to provide a means for accessing the functions of laboratory equipment 4. To achieve this, a software service 6 is installed on host computer 1. In the embodiment of Fig. 1, software service 6 comprises two parts, namely an executable control application 7 and a dynamically linkable library (DLL) 8.

When control application 7 is started, it binds a TCP/IP socket server 15 to TCP/IP port 3336 (or any other port as defined by a suitable parameter accessible by control application 7) and listens to incoming messages. It also links itself to DLL 8. TCP/IP socket server 15 is running asynchronously and is able to handle multiple client applications and command concurrently.

DLL 8 comprises code for controlling laboratory equipment 4 through interface 5. This code is available to processes running on host computer 1 by means of an API (application programming interface) 9 defining a set of high level functions. The code in DLL 8 translates the commands received through its API 9 to a series of low level instructions understood by laboratory equipment 4.

As mentioned, one primary purpose of software service 6 is to listen to commands arriving at TCP/IP port 3336 and to control laboratory equipment 4 in accordance with these instructions. This can be used by processes running on host computer 1 or on a remote computer 10 for controlling the laboratory equipment 4.

In the embodiment of Fig. 1, two such processes are illustrated as client applications 11 and 12, one running on host computer 1 and the other on a remote computer 10, wherein remote computer 10 is connected via TCP/IP to host computer 1.

To control laboratory equipment 4, client application 11 or 12 sends a command to TCP/IP port 3336, which is received by control application 7. Control application 7 translates the received command to one or more API calls of DLL 8 and calls the same. Advantageously, there is one API function provided by DLL 8 for each command understood by control application 7.

Typically, each command incoming through TCP/IP port 3336 will be answered. The answer may comprise a simple status message indicating if the command was executed successfully, or it can also contain a reply received from laboratory equipment 4, such as the current temperature or other atmospheric conditions within the climate controlled cabinet.

Advantageously, the answer is sent through TCP/IP port 3336 during the session established by client application 11 or 12, albeit other means of communication from software service 6 to the client application 11, 12 can be used as well.

One advantage of using a TCP/IP port is the fact that an inherently network-enabled solution is achieved. The port can not only be accessed from host computer 1, but from remote computers as well.

Another important advantage of using a TCP/IP port is the fact that such a port is well suited for exchanging character strings, which allows to encode all commands and answers as strings of characters. In contrast to a binary encoding, an encoding as strings of characters is well portable between different applications and platforms.

Advantageously, the simple "telnet" protocol can be used for data exchange through the TCP/IP port, albeit other protocols can be used as well, such as "ssh" if a secure and/or authenticated transmission is required.

In the following, some examples of command and their processing is described.

### Example 1:

The command 'ACTIVATE(id)' (where id is a number, such as '10') sent to TCIP/IP port 3336 is used to tell software service 6 to open communication with a laboratory system having the given identifier number id. Using an identifier number allows to connect several items or different sections of laboratory equipment 4 to host computer 1, each of which is addressed by a unique identifier. Asynchronous TCP/IP socket server 15 can run the commands for the different items of equipment concurrently.

When control application 7 e.g. receives the 'ACTIVATE(10)' command, it converts the parameter 10 to a binary number and calls a function defined as
int Activate (int id);
in the API of DLL 8, passing the binary number 10 in parameter id. When this function is called, DLL 8 translates it into a series of low level instructions for the laboratory equipment 4 that has the identifier '10'. For example, DLL 8 can issue an instruction for resetting the equipment's hardware, whereupon its waits for a confirmation signal from the equipment that the resetting operation is completed. Then, it issues an instruction to the equipment to return its status. When the status is retuned by the equipment, it is returned by function Activate as a binary number to control application 7, which translates this number to a string and returns it through TCP/IP port 3336 to client application 11 or 12.

### Example 2:

The command 'MOVEPLATE(srcID, srcPos, dstID, dstPos)' (with srcID, srcPos, dstID, dstPos being numbers, such as '10, 3, 10, 7') sent to TCIP/IP port 3336 is used to tell software service 6 to move a laboratory object (a "plate") from one location to another. The parameters srcID and srcPos define the source location where the plate is at the present time, while the parameters dstID and dstPos define where the plate has to go.

When control application 7 e.g. receives the 'MOVEPLATE (10, 3, 10, 7)' command, it converts the parameters 10, 3, 10, 7 to a binary numbers and calls a function defined as
int Move(int srcID, int srcPos, int dstID, int dstPos);
in the API of DLL 8, passing the binary numbers 10, 3, 10, 7 as its arguments. DLL 8 again translates the command into a series of low level instructions for the laboratory equipment for moving the equipment's transport device to the correct source location, taking up the plate, moving the plate to the correct destination position, and putting it down. The function returns again a status code, which control application 7 translates to a string and returns through TCP/IP port 3336 to client application 11 or 12.

Other examples for commands that can be sent to TCP/IP port 3336 comprise e.g.:
- A command for activating/deactivating a shaker located in equipment 4 and for defining its shaking speed.
- A command for locking/unlocking a door of equipment 4.
- A command for operating a barcode reader in equipment 4 in order to read a barcode on one of the microwell plates stored therein. The answer returned by this command is a string representation of the barcode data.
- A command for controlling the climate in equipment 4 as well as a command for reading out the values of environmental sensors in equipment 4.

The functionality of control application 7 can be restricted to simply passing messages and answers the between TCP/IP port and DLL 8. However, control application 7 can also provide further functionality, such as a user interface 14 for controlling and/or monitoring the laboratory equipment manually. Such a user interface 14 can e.g. provide functions for displaying the plates stored in a storage system and for manipulating them, for example using a "drag and drop" interface. Control application 7 can further offer a programming environment for programming sequences of operations to be carried out on the equipment, and/or for inventory tracking of the objects stored within the equipment.

The software service 6 will, in general, have to access a variety of predefined settings, such as the port number of the TCP/IP port to be used, the hardware interface 5 to be used for connecting to laboratory equipment 4, the type of laboratory equipment, etc. These settings can e.g. be stored in configuration files on host computer 1 and/or they,can be accessed and changed by means of a user interface provided by control application 7.

It must be noted that any application run on host computer 1 can theoretically control DLL 8 either by sending commands through the TCP/IP port or by linking to the DLL directly. An access through the TCP/IP port will provide better insulation and modularity, while a direct linking to the DLL may allow additional functionality and/or improved throughput.

In the embodiment shown so far, software service 6 was implemented by control application 7 and DLL 8. It must be noted, though, that the same or an equivalent functionality can also be achieved by different configurations. For example, control application 7 can also include the functionality of DLL 8. Alternatively, a single, faceless background task or driver software can be bound to the TCP/IP port as well as to hardware interface 5 as provide the functionality of control application 7 (without user interface) and DLL 8, while the user interface could, if desired, be provided by client application 11.

The architecture described here allows several client applications 11, 12 to access the laboratory equipment 4 at the same time, e.g. one for displaying the status of the equipment and another one for controlling the flow of laboratory objects within it. Since the TCP/IP standard allows concurrent access from a plurality of clients to the same port, such a scheme can be implemented easily.

The software in laboratory equipment 4 can be simple since any complex operations can be carried out by software service 6. In particular, as mentioned, software service 6 can generate complex series of instructions for the equipment from a single command message. Also, software service 6 can contain safety checks for preventing illegal operations on equipment 4.

The client applications 11, 12 can be specialized applications for controlling laboratory equipment. Alternatively, simple "telnet" terminal clients can be used as well for manually entering commands. Not web browser is required.

Software service 6 can also send messages to the client applications 11, 12 not in reply to a command message, but in reply to an event generated either by software service 6 or by laboratory equipment 4. In particular, software service 6 can be instructed to monitor the laboratory equipment 4 and issue an event message whenever a predefined event occurs. For example, software service 6 can monitor the temperature in a climate controlled cabinet of equipment 4 and issue an event message when the temperature falls outside a given range. The event message can be sent to the appropriate client software 11, 12 e.g. through an existing TCP/IP socket or by other means.

## Claims

1. A method for controlling laboratory equipment (4), in particular an automated storage system for laboratory objects, using a host computer (1) connected to said laboratory equipment (4) via a hardware interface (5), said method comprising the steps of
running, on said host computer (1), a software service (6) listening to messages on a TCP/IP port (2) of said host computer (1), and
processing, by said software service (6), a command received through said TCP/IP port (2) and controlling said laboratory equipment (4) through said hardware interface (5) in accordance with said command.

2. The method of claim 1 wherein said laboratory equipment (4) is remote to said host computer (1).

3. The method of claim 2 wherein said laboratory equipment (4) is connected to said host computer (1) by means of a serial interface, in particular a USB, RS-232 or Ethernet interface.

4. The method of any of the preceding claims wherein said step of processing said command comprises the step of translating said command into a series of instructions and passing said instructions to said laboratory equipment (4).

5. The method of any of the preceding claims wherein said command is encoded as a string of characters.

6. The method of any of the preceding claims further comprising the step of sending an answer in reply to said command, wherein said answer is sent through said TCP/IP port (2), and in particular wherein said answer is encoded as a string of characters.

7. The method of any of the preceding claims comprising the step of running a client application (11) on said host computer (1), wherein said client application (11) communicates with said software service (6) through said TCP/IP port (2).

8. The method of any of the preceding claims wherein said software service (6) comprises a dynamically linkable library (8) providing an API for controlling said laboratory equipment (4) without sending commands through said TCP/IP port (2).

9. The method of any claim 8 wherein said software service (6) comprise an executable control application (7) in addition to said dynamically linkable library (8), which executable control application (7) binds itself to said TCP/IP port (2) and forwards said commands from said TCP/IP port (2) to said dynamically linkable library (8).

10. The method of any of the preceding claims wherein communication through said TCP/IP port (2) is carried out under telnet protocol.

11. The method of any of the preceding claims wherein said software service (6) issues an event message when a predefined event occurs on said laboratory equipment (4), and in particular
wherein said software service (6) monitors said laboratory equipment (4) for said predefined event and/or wherein said event message is sent through said TCP/IP port (2).

12. A computer program product comprising the means for acting as a software service (6) in the method of any of the preceding claims.

13. A computer comprising means for carrying out the steps of the method of any of the claims 1 to 11.
